(19) Europäisches Patentamt
European Patent Office
Office européen des brevets

(11) **EP 2 439 557 B1**

(12) **EUROPÄISCHE PATENTSCHRIFT**

(45) Veröffentlichungstag und Bekanntmachung des Hinweises auf die Patenterteilung:
**03.12.2014 Patentblatt 2014/49**

(51) Int Cl.:
***G01T 7/00*** *(2006.01)*

(21) Anmeldenummer: **10187023.6**

(22) Anmeldetag: **08.10.2010**

(54) **Aktivitätsbestimmungsverfahren der ß-Aktivität des Kohlenstoffisotops C14**

Method for determining the ß-activity of carbon isotope C14

Procédé de détermination de l'activité ß de l'isotope de carbone C14

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**11.04.2012 Patentblatt 2012/15**

(73) Patentinhaber: **Arbeitsgemeinschaft Versuchs-Reaktor (AVR) 52428 Jülich (DE)**

(72) Erfinder: **Wahl, Jürgen DE - 52379 Langerwehe (DE)**

(74) Vertreter: **Rohmann, Michael Andrejewski - Honke Patent- und Rechtsanwälte An der Reichsbank 8 45127 Essen (DE)**

(56) Entgegenhaltungen:
**EP-A1- 0 014 955          CS-B1- 274 004
DE-A1-102005 016 792     GB-A- 1 362 003**

• **HOU ET AL: "Critical comparison of radiometric and mass spectrometric methods for the determination of radionuclides in environmental, biological and nuclear waste samples", ANALYTICA CHIMICA ACTA, ELSEVIER, AMSTERDAM, NL, Bd. 608, Nr. 2, 23. Dezember 2007 (2007-12-23), Seiten 105-139, XP022428138, ISSN: 0003-2670, DOI: DOI:10.1016/J.ACA. 2007.12.012**

**Beschreibung**

Die Erfindung betrifft ein Aktivitätsbestimmungsverfahren des Kohlenstoffisotops C14.

Verfahren zur Bestimmung der β-Aktivität des Kohlenstoffisotops C14 sind aus der Praxis grundsätzlich bekannt. Diese Verfahren sind jedoch sehr aufwändig, da vor der Messung der C14-Aktivität andere Radionuklide aus der Messprobe zu entfernen sind, die einen störenden Einfluss auf die C14-Aktivitäts-bestimmung ausüben. Die Abtrennung der störenden Radionuklide erfordert einen hohen apparativen und zeitlichen Aufwand. Weiterhin nachteilig bei den aus der Praxis bekannten Verfahren ist der hohe finanzielle Aufwand.

EP 0 014 955 A1 offenbart ein Verfahren zum Vorbereiten von Proben von mit Tritium- bzw. Tritium- und C(14) Isotopen zusammen markierten Materialien zur Flüssigkeitsszintillations-Radioaktivitätsmessung.

DE 10 2005 016792 offenbart ein Verfahren zur Sr90 Aktivitätsbestimmung, bei dem rohes Probenmaterial getrocknet und gemahlen wird und eine gammaspektrometrische Messung zur Bestimmung der spezifischen Aktivität der Beta/Gamma Strahler durchgeführt wird.

Daher liegt der Erfindung das technische Problem zugrunde, ein Verfahren zur Bestimmung der β-Aktivität des Kohlenstoffisotops C14 anzugeben, das einfach und problemlos durchführbar ist, das kurze Messzeiten ermöglicht, das wirtschaftlich durchführbar ist und mit dem die vorstehend beschriebenen Nachteile vermieden werden.

Zur Lösung des technischen Problems lehrt die Erfindung ein Aktivitätsbestimmungsverfahren des Kohlenstoffisotops C14 eines Probenmaterials, gemäß Anspruch 1.

Vorzugsweise wird mit der Messung der Gesamtbetazählrate $n_1$ die Betastrahlung des Kohlenstoffisotops C14 $n_{1C14}$, die Betastrahlung der natürlichen und künstlichen β-/γ-Strahler $n_{1\gamma}$ und zweckmäßigerweise die Betastrahlung des reinen Betastrahlers Strontium 90 $n_{1Sr90}$ erfasst. Es empfiehlt sich, dass aus der Betazählrate $n_{2Sr90}$ unter Berücksichtigung der β-Messempfindlichkeiten des reinen β-Strahlers Strontium 90 der abgeschirmten Materialprobe und der unabgeschirmten Materialprobe die Betazählrate $n_{1Sr90}$ bestimmt wird. Bei der Messung der abgeschirmten Gesamtbetazählrate $n_2$ werden gemäß einer bevorzugten Ausführungsform die Betazählraten der natürlichen und künstlichen β-/γ-Strahler $n_{2\gamma}$ sowie die Betastrahlung von Strontium 90 $n_{2Sr90}$ erfasst. Die Betazählraten für die nicht abgeschirmte Materialprobe $n_{1\gamma}$ und für die abgeschirmte Materialprobe bzw. abgedeckte Materialprobe $n_{2\gamma}$ sind nach einer bevorzugten Ausführungsform des erfindungsgemäßen Verfahrens durch eine gammaspektrometrische Messung der spezifischen Aktivitäten $a(N_i)$ der in der Materialprobe enthaltenen künstlichen und natürlichen β-/γ-Strahler (Nuklide $N_i$) unter Berücksichtigung ihrer spezifischen Messempfindlichkeiten $\varepsilon_\beta(N_i)$ bestimmbar.

Es liegt im Rahmen der Erfindung, dass $\varepsilon_\beta$ (C14)

eine ermittelte Konstante ist, die für das Kohlenstoffisotop C14 und für die bei der Messung der Gesamtbetazählrate $n_1$ eingestellten Messanordnung, nämlich der Messprobenmasse m und Messprobenverteilung $f_m$ (Masse in g pro Flächeneinheit in $cm^2$) charakteristisch ist. Die Konstante $\varepsilon_\beta$ wird im Rahmen der Erfindung als spezifische Messempfindlichkeit bezeichnet. Für jedes Nuklid $N_i$ lässt sich die spezifische Messempfindlichkeit $\varepsilon_\beta (N_i)$ bestimmen, wobei $N_i$ vorzugsweise reine β-Strahler und/oder β-/γ-Strahler sind.

Das Produkt aus der spezifischen Dichte $\rho$ des Probenmaterials und der Abschirmdicke d wird im Rahmen der Erfindung auch als Abschirmflächengewicht $f_m$ bezeichnet. Gemäß einer Ausführungsform des erfindungsgemäßen Verfahrens wird die spezifische Messempfindlichkeit $\varepsilon_i (N_i)$ für ein vorgegebenes Abschirmflächengewicht $f_m$ messtechnisch mit Kalibrierpräparaten bestimmt. Mit den ermittelten spezifischen Messempfindlichkeiten $\varepsilon_\beta (N_i)$ sind die Betazählraten der Nuklide $N_i$ bestimmbar.

Es hat sich als vorteilhaft herausgestellt, dass die Materialprobe mit der Maßgabe gemahlen wird, dass die Korngröße kleiner als 0,2 mm ist. Weiterhin hat sich gezeigt, dass bei einer Betazählratenmessung unabhängig von der Materialart stets der gleiche Wert der Messempfindlichkeit $\varepsilon_i (N_i)$ ansetzbar ist, wenn die Korngröße des Probenmaterials bevorzugt kleiner als 0,2 mm ist.

Vorzugsweise wird die Materialprobe getrocknet. Es hat sich bewährt, dass die Materialprobe vor dem Mahlen getrocknet wird.

Gemäß einer Ausführungsform des erfindungsgemäßen Verfahrens wird eine flüssige Probe auf ein Trägermaterial aufgebracht und zur Bildung der Materialprobe getrocknet. Es hat sich als vorteilhaft herausgestellt, dass auf diese Weise die Bestimmung der β-Aktivität des Kohlenstoffisotops C14 von flüssigen Proben problemlos möglich ist. Zweckmäßigerweise wird das Trägermaterial mit der aufgebrachten flüssigen Probe nach dem Trocknen mit der Maßgabe gemahlen, dass die Korngröße kleiner als 0,2 mm ist.

Es empfiehlt sich, dass als Absorptionselement eine folienartige bzw. filmartige Materialbahn, vorzugsweise eine Papierbahn, eingesetzt wird.

Gemäß einer vorteilhaften Ausführungsform werden die spezifischen Messempfindlichkeiten der bei der C14-Aktivitätsbestimmung zu berücksichtigenden Radionuklide $N_i$ durch Messungen von Kalibrierpräparaten ermittelt.

Der Erfindung liegt die Erkenntnis zugrunde, dass mit dem erfindungsgemäßen Verfahren die C14-Aktivität in jedem flüssigen und festen Probenmaterial einfach und problemlos bestimmbar ist. Wesentlich an dem erfindungsgemäßen Verfahren ist dabei die einfache Probenaufbereitung. Es ist darauf hinzuweisen, dass lediglich die Handhabung einer festen Materialprobe erforderlich ist, die getrocknet und gemahlen mit einer bestimmten Masse auf eine vorgegebene Messfläche aufgebracht werden muss. Insofern zeichnet sich das erfindungsgemäße Verfahren gegenüber den aus der Praxis bekannten und eine nasschemische Probenaufbereitung bedingenden Verfahren durch einen großen Vorteil aus. Weiterhin liegt der Erfindung die Erkenntnis zugrunde, dass zur Bestimmung der Gesamtbetazahlräte $n_1$ und der abgeschirmten Gesamtbetazählrate $n_2$ derselbe Detektor und dieselbe Messvorrichtung eingesetzt werden können. Ein aufwändiges Hantieren mit dem strahlenden Probenmaterial wird auf überraschend einfache Weise vermieden. Darüber hinaus zeichnet sich das erfindungsgemäße Verfahren durch sehr kurze Messzeiten (ca. zwei Stunden für die Gesamtbetazählraten $n_1$ und $n_2$) aus. Im Ergebnis ist eine Vielzahl von Proben in einem kurzen Zeitintervall zu äußerst wirtschaftlichen Bedingungen messbar. Insofern unterscheidet sich das erfindungsgemäße Verfahren signifikant zu der chemischen Probenaufbereitung und zeichnet sich durch eine besondere Einfachheit aus. Weiterhin liegt der Erfindung die Erkenntnis zugrunde, dass auch Probenmaterial mit hohen spezifischen Aktivitäten verschiedenster Radionuklide durch eine einfache Verdünnung mit einem mahlfähigen Material, das selbst auch radioaktiv sein kann, bestimmbar ist. Aufgrund der geringen Kosten pro Messung eignet sich das erfindungsgemäße Verfahren insbesondere zur Bewertung der statistischen Sicherheit, wenn eine große Anzahl von Materialproben auf ihre C14-Kontamination hin gemessen werden muss.

Nachfolgend wir die Erfindung anhand eines Beispieles genauer erläutert.

Zur Vorbereitung der Messung der spezifischen Aktivität des Kohlenstoffisotops C14 in einem Probenmaterial aus Bauschutt wird das Probenmaterial getrocknet und bis zu einer Korngröße kleiner 0,2 mm gemahlen. Von dem Mahlgut werden 10 g des Probenmaterials als Messprobe auf eine Fläche von beispielsweise 300 cm$^2$ aufgetragen und die Gesamtbetazählrate $n_1$ gemessen. Diese beträgt bei dem Beispiel 30.409 Impulse pro Minute (IPM). Das Probenmaterial wird dann mit einem Abdeckelement abgedeckt, das zwischen dem Probenmaterial und dem Detektor zur Bestimmung der abgeschirmten Gesamtbetazählrate $n_2$ angeordnet wird. Die abgeschirmte Gesamtbetazählrate $n_2$ beträgt in dem Beispiel 22.514 IPM.

Nach einer gammaspektrometrischen Messung sind die Aktivitäten der natürlichen und künstlichen β-/γ-Strahler bekannt. Mit Hilfe der aus Messungen mit

Kalibrierpräparaten bekannten spezifischen Messempfindlichkeiten dieser β-/γ-Strahler lassen sich damit nun in dem Ausführungsbeispiel die Betazählrate $n_{1\gamma}$ = 4.462 IPM für die unabgeschirmte Messprobe und die Betazählrate $n_{2\gamma}$ = 2.539 IPM für die abgeschirmte Messprobe berechnen.

Da bei der Messung der abgeschirmten Gesamtbetazählrate $n_2$ lediglich die Betazählraten der β-/γ-Strahler $n_{2\gamma}$ und des reinen β-Strahlers Strontium 90 (Sr90) $n_{2Sr90}$ erfasst wird, ergibt sich die abgeschirmte Betazählrate von Strontium 90 $n_{2Sr90}$ aus der Differenz der abgeschirmten Gesamtbetazählrate $n_2$ und der abgeschirmten Betazählrate $n_{2\gamma}$ der β-/γ-Strahler, in diesem Beispiel zu $n_{2Sr90}$ =19.975 IPM. Unter Berücksichtigung der spezifischen Messempfindlichkeit von Sr90 für die nicht abgeschirmte Materialprobe $\varepsilon_{1\beta}$ (Sr 90) = 0,321 und der spezifischen Messempfindlichkeit von Sr90 für die abgeschirmte Materialprobe $\varepsilon_{2\beta}$ (Sr90) = 0,252 ergibt sich die Betazählrate von Sr90 $n_{1Sr90}$ für die nicht abgeschirmte bzw. unabgeschirmte Materialprobe als Produkt aus $n_{2Sr90}$ und dem Quotienten aus $\beta_{1\beta}$ (Sr90) und $\varepsilon_{2\beta}$ (Sr90) zu $n_{1Sr90}$ = 25.444 IPM.

Durch die Messung der Gesamtbetazählrate $n_1$ werden die Betazählraten des Kohlenstoffisotops C14 $n_{1C14}$, die Betazählraten der β-/γ-Strahler $n_{1\gamma}$ und die Betazählraten des reinen Betastrahlers Strontium 90 $n_{1Sr90}$ erfasst. Die Betazählrate des Kohlenstoffisotops C14 ergibt sich also aus einer Differenz der gemessenen Gesamtbetazählrate $n_1$, der Betazählrate der β-/γ-Strahler $n_{1\gamma}$, und der ermittelten Betazählrate $n_{1Sr90}$. In dem Ausführungsbeispiel beträgt die Betazählrate des Kohlenstoffisotops C14 503 IPM. Unter Berücksichtigung der Masse des Probenmaterials und der spezifischen Messempfindlichkeit von C14 von 0,021 weist das gemessene Probenmaterial eine spezifische Aktivität des Kohlenstoffisotops C14 von 39,92 Becquerel pro Gramm (Bg/g) auf.

## Patentansprüche

1. Aktivitätsbestimmungsverfahren des Kohlenstoffisotops C14 eines Probenmaterials,
   wobei an einer gemahlenen Materialprobe der Masse m eine Gesamtbetazählrate $n_1$ detektiert wird,
   wobei mit einer Messung der Gesamtbetazählrate $n_1$ die Betastrahlung des Kohlenstoffisotops C14 $n_{1C14}$, die Betastrahlung der natürlichen und künstlichen β-/γ -Strahler $n_{1\gamma}$ und die Betastrahlung des reinen Betastrahlers Strontium 90 $n_{1S90}$ erfasst werden,
   wobei bei einer weiteren Messung einer abgeschirmten Gesamtbetazählrate $n_2$ zwischen der Materialprobe und einem Detektor ein Absorptionselement für die Betastrahlung angeordnet wird, wobei bei einer Messung der abgeschirmten Gesamtbetazählrate $n_2$ die Betazählraten der natürlichen und künstlichen β-/γ -Strahler $n_{2\gamma}$ sowie die Betastrahlung von Strontium 90 $n_{2Sr90}$ erfasst werden,
   wobei mit dem Absorptionselement Betastrahlung mit einer Energie von bis zu ungefähr 0,2 MeV absorbiert wird,
   wobei durch eine gammaspektrometrische Messung an dem Probenmaterial die Betazählraten $n_{1\gamma}$ von β-/γ -Strahlen der unabgeschirmten Materialprobe und die Betazählrate $n_{2\gamma}$ der β-/γ -Strahler für die mit dem Absorptionselement abgeschirmte Materialprobe bestimmt werden,

wobei aus der gemessenen Gesamtbetazählrate $n_1$, der gemessenen abgeschirmten Gesamtbetazählrate $n_2$, der β-Zählraten $n_{1\gamma}$ und $n_{2\gamma}$ die Betazählrate $n_{1C14}$ von C14 bestimmt wird und wobei die spezifische Aktivität von C14 nach der Gleichung

$$a(C14) = \frac{n_{1C14}}{\varepsilon_{\beta(C14)} \cdot m}$$ bestimmt wird, wobei $\varepsilon_\beta$

(C14) die Messempfindlichkeit für die Messung der Betazählrate $n_{1C14}$ darstellt.

2. Aktivitätsbestimmungsverfahren nach Anspruch 1, wobei die Materialprobe getrocknet und gemahlen wird.

3. Aktivitätsbestimmungsverfahren nach einem der Ansprüche 1 oder 2, wobei eine flüssige Probe auf ein Trägermaterial aufgebracht wird und wobei zur Bildung der Materialprobe das Trägermaterial mit der aufgebrachten flüssigen Probe getrocknet und gemahlen wird.

4. Aktivitätsbestimmungsverfahren nach einem der Ansprüche 1 bis 3, wobei die Materialprobe mit der Maßgabe gemahlen wird, dass die Korngröße kleiner als 0,2 mm ist.

5. Aktivitätsbestimmungsverfahren nach einem der Ansprüche 1 bis 4, wobei als Absorptionselement eine folienartige bzw. filmartige Materialbahn, vorzugsweise eine Papierbahn, eingesetzt wird.

6. Aktivitätsbestimmungsverfahren nach einem der Ansprüche 1 bis 5, wobei spezifische Messempfindlichkeiten $\varepsilon_i(N_i)$ für natürliche und/oder künstliche Nuklide $N_i$ vorzugsweise mit einem Kalibrierpräparat bestimmt werden.

**Claims**

1. A method for determining the activity of the carbon isotope C-14 in a sample material,
   wherein a beta gross count rate, $n_1$, is detected in a ground sample of material with mass m, wherein by means of a measurement of the beta gross count rate $n_1$, the beta particle emission of the C-14 carbon isotope, $n_{1C14}$, the beta particle emission of the natural and artificial β-/γ emitters, $n_{1\gamma}$, and the beta particle emission of the pure beta emitter strontium 90, $n_{1Sr90}$, are acquired,
   wherein during a further measurement of a shielded beta gross count rate, $n_2$, an element for absorbing the beta particle emission is disposed between the material sample and a detector, wherein during a measurement of the shielded beta gross count rate $n_2$, the beta count rates of the natural and artificial β-/γ emitters, $n_{2\gamma}$, as well as the beta particle emission of strontium 90, $n_{2Sr90}$, are acquired,
   wherein beta particle emission with an energy of up to approximately 0.2 MeV is absorbed with the absorption element,
   wherein the beta count rates $n_{1\gamma}$ from the β-/γ emitters of the unshielded material sample and the beta count rates $n_{2\gamma}$ for the β-/γ emitters for the material sample shielded with the absorption element are determined by means of a gamma spectrometric measurement,
   wherein the beta count rate of C-14, $n_{1C14}$, is determined from the measured beta gross count rate $n_1$, the measured shielded beta gross count rate $n_2$, and the β-count rates $n_{1\gamma}$ and $n_{2\gamma}$, and wherein the specific activity of C-14 is determined from the equation

$$a(C14) = \frac{n_{1C14}}{\varepsilon_{\beta(C14)} \cdot m}$$

wherein $\varepsilon_\beta$(C-14) represents the sensitivity of the measurement of the beta count rate $n_{1C14}$.

2. The method for determining the activity as claimed in claim 1, wherein the material sample is dried and ground.

3. The method for determining the activity as claimed in claim 1 or claim 2, wherein a liquid sample is applied to a carrier material and wherein the support material with the applied liquid sample is dried and ground in order to form the material sample.

4. The method for determining the activity as claimed in one of claims 1 to 3, wherein grinding of the material sample is such that the grain size is smaller than 0.2 mm.

5. The method for determining the activity as claimed in one of claims 1 to 4, wherein a foil-like or film-like length of material, preferably a paper web, is used as the absorption element.

6. The method for determining the activity as claimed in one of claims 1 to 5, wherein specific sensitivities in the measurement, $\varepsilon_1(N_i)$, are determined for natural and/or artificial nuclides $N_i$, preferably using a calibration specimen.

**Revendications**

1. Procédé permettant de déterminer l'activité de l'isotope de carbone C14 dans un échantillon, consistant à
   détecter, sur un échantillon de matière broyé ayant la masse m, un taux global de comptage bêta $n_1$, la mesure du taux global de comptage bêta $n_1$ permettant de détecter le rayonnement bêta $n_{1C14}$ émis par l'isotope de carbone C14, le rayonnement bêta $n_{1\gamma}$ émis par des sources naturelles et artificielles de rayonnement $\beta/\gamma$, et le rayonnement bêta $n_{1Sr90}$ émis par le strontium 90, pur émetteur bêta,

mesurer, en outre, un taux global de comptage bêta $n_2$ sous l'effet d'un blindage, en disposant un élément d'absorption de rayonnement bêta entre l'échantillon de matière et un détecteur, ladite mesure du taux global de comptage bêta $n_2$ sous l'effet d'un blindage permettant de détecter les taux de comptage bêta $n_{2\gamma}$ des sources naturelles et artificielles de rayonnement $\beta/\gamma$ ainsi que le rayonnement bêta $n_{2Sr90}$ émis par le strontium 90,

ledit élément d'absorption permettant d'absorber du rayonnement bêta dont l'énergie peut atteindre jusqu'à environ 0,2 MeV,

soumettre ledit échantillon à une mesure gamma-spectrométrique, pour ainsi déterminer les taux de comptage bêta $n_{1\gamma}$ du rayonnement $\beta/\gamma$ émis par l'échantillon de matière sans blindage et le taux de comptage bêta $n_{2\gamma}$ des sources de rayonnement $\beta/\gamma$ pour l'échantillon de matière blindé au moyen dudit élément d'absorption,

la mesure du taux global de comptage bêta $n_1$, la mesure du taux global de comptage bêta $n_2$ sous l'effet du blindage, et les taux de comptage bêta $n_{1\gamma}$ et $n_{2\gamma}$ permettant de déterminer le taux de comptage bêta $n_{1C14}$ provoqué par le C14, et l'activité spécifique du C14 étant déterminée selon l'équation

$$a(C14) = \frac{n_{1C14}}{\varepsilon_{\beta(C14)} \cdot m},$$ dans laquelle $\varepsilon_\beta(C14)$ représente la sensibilité de mesure pour la mesure du taux de comptage bêta $n_{1C14}$.

2. Procédé de détermination d'activité selon la revendication 1, ledit échantillon de matière étant séché et broyé.

3. Procédé de détermination d'activité selon l'une des revendications 1 ou 2, un échantillon liquide étant appliqué sur un matériau support, et ledit échantillon de matière étant formé en soumettant le matériau support, suite à l'application dudit échantillon liquide, à un séchage et un broyage.

4. Procédé de détermination d'activité selon l'une des revendications 1 à 3, ledit échantillon de matière étant broyé de manière à obtenir une granulométrie inférieure à 0,2 mm.

5. Procédé de détermination d'activité selon l'une des revendications 1 à 4, ledit élément d'absorption étant mis en oeuvre sous forme d'une bande de matière qui s'apparente à une feuille ou un film, s'agissant préférentiellement d'une bande en papier.

6. Procédé de détermination d'activité selon l'une des revendications 1 à 5, les sensibilités de mesure spécifiques $\varepsilon_i(N_i)$ pour les nucléides $N_i$ naturels et/ou artificiels étant préférentiellement déterminées au moyen d'une préparation d'étalonnage.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0014955 A1

- DE 102005016792